# EUROPEAN PATENT APPLICATION

(11) **EP 4 635 664 A1**
(43) Date of publication of application: **22.10.2025**
(21) Application number: 22968541.7
(22) Date of filing: 16.12.2022
(51) Int. Cl.: B23H 7/20

(54) **PROGRAM GENERATION DEVICE AND PROGRAM GENERATION METHOD**

(71) Applicant: FANUC CORPORATION, Oshino-mura Minamitsuru-gun Yamanashi 401-0597 (JP)
(72) Inventor: ABE Hiroyuki, Minamitsuru-gun, Yamanashi 401-0597 (JP)
(74) Representative: Schmidt, Steffen J.
(86) International application number: PCT/JP2022/046375
(87) International publication number: WO 2024/127631

(57) **Abstract**

An aspect of the present disclosure is a program generation device that generates a machining program, the program generation device comprising: an acquisition unit that acquires a machining start point and a machining path; a determination unit that determines a connection element to which an approach path is to be connected and a waypoint through which the approach path is to pass; an approach path generation unit that generates the approach path going from the machining start point, through the waypoint, to the connection element; and a machining program generation unit that generates the machining program, wherein the approach path generation unit generates the approach path such that the direction of the approach path changes at the waypoint.

## Description

### TECHNICAL FIELD

The present disclosure relates to a program generation device and a program generation method.

### BACKGROUND ART

JP S61-058008 A discloses a method of determining an approach path in wire electrical discharge machining.

### SUMMARY OF THE INVENTION

For a wire electrical discharge machine, it is desired to generate an approach path that enables stable electrical discharge machining.

A first aspect of the present disclosure is a program generation device that generates a machining program for controlling a wire electrical discharge machine, the program generation device comprising: an acquisition unit configured to acquire a machining start position, and a machining path indicating a machining shape, the machining start position and the machining path being designated by a user; a determination unit configured to determine a connection element that is an element of the machining path to which an approach path extending from the machining start position is connected, and at least one or more via-points through which the approach path passes; an approach path generation unit configured to generate the approach path extending from the machining start position to the connection element via the at least one or more via-points; and a machining program generation unit configured to generate the machining program based on a shape in which the approach path that has been generated is added to the connection element of the machining path, wherein the approach path generation unit generates the approach path in a manner so that a direction of the approach path changes at the at least one or more via-points.

A second aspect of the present disclosure is a program generation method for generating a machining program for controlling a wire electrical discharge machine, the program generation method comprising: an acquisition step of acquiring a machining start position and a machining path that are designated by a user; a determination step of determining a connection element that is an element of the machining path to which an approach path extending from the machining start position is connected, and at least one or more via-points through which the approach path passes; an approach path generation step of generating the approach path extending from the machining start position to the connection element via the at least one or more via-points; and a machining program generation step of generating the machining program based on a shape in which the approach path that has been generated is added to the connection element of the machining path, wherein, in the approach path generation step, the approach path is generated in a manner so that a direction of the approach path changes at the at least one or more via-points.

### BRIEF DESCRIPTION OF DRAWINGS

[FIG. 1] FIG. 1 is a diagram for explaining an approach path generated by a conventional program generation device;
[FIG. 2] FIG. 2 is a block diagram showing the configuration of a program generation device according to an embodiment;
[FIG. 3] FIG. 3A is a diagram for explaining an example of an approach path generated by the program generation device according to the embodiment, FIG. 3B is a diagram for explaining another example of the approach path to be generated, and FIG. 3C is a diagram for explaining still another example of the approach path to be generated;
[FIG. 4] FIG. 4 is a flowchart showing an example of a processing procedure related to machining program generation performed by the program generation device according to the embodiment; and
[FIG. 5] FIG. 5 is a flowchart showing an example of a processing procedure related to machining program generation performed by the program generation device according to a modification.

### DETAILED DESCRIPTION OF THE INVENTION

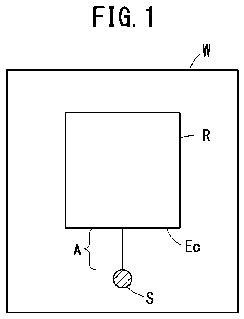

FIG. 1 is a diagram for explaining an approach path A generated by a conventional program generation device. FIG. 1 shows a figure showing a workpiece W to be subjected to electrical discharge machining by a wire electrical discharge machine. A machining start position S of the electrical discharge machining, and a machining path R indicating a machining shape are shown in the figure. The machining start position S and the machining path R are designated in advance by a user of the wire electrical discharge machine.

The machining path R has at least one element. The element is, for example, a straight line, a curved line, or the like. The machining path R illustrated in FIG. 1 is a rectangle having four sides, and thus has four elements (straight lines). An element to which the approach path A extending from the machining start position S is connected is referred to as a connection element Ec. The approach path A extending from the machining start position S to the connection element Ec of the machining path R is shown in the figure showing the workpiece **W.** The wire electrical discharge machine performs electrical discharge machining on the workpiece W along the approach path A and the machining path R continuous therewith.

According to the conventional program generation device, as illustrated in FIG. 1, the approach path A is generated as a straight line from the machining start position S to the connection element Ec (for example, a straight line of the shortest distance). Before electrical discharge machining is actually started from the machining start position S, a through hole through which a wire electrode is passed is formed in advance at the machining start position S of the workpiece **W.**

When the electrical discharge machining is started, the wire electrode generates heat. When the wire electrode generates heat, the wire electrode may be broken. Therefore, it is necessary to cool the wire electrode by injecting a working fluid at a high pressure into the machining gap between the wire electrode and the workpiece W. By cooling the wire electrode, the wire electrode is prevented from breaking.

However, in the case where the through hole at the machining start position S is large, the pressure of the injected working fluid is released in the through hole and is likely to decrease in the electrical discharge machining in the approach path A. Therefore, the wire electrode cannot be sufficiently cooled, and the wire electrode may be broken. In the case where the machining current is adjusted to be small in order to reduce the amount of heat generated by the wire electrode, the machining speed may decrease.

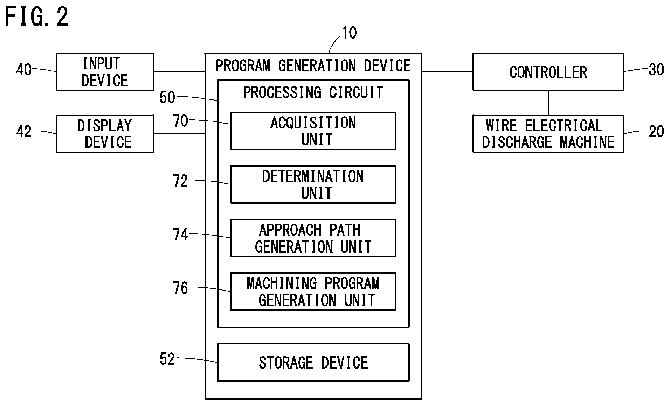

FIG. 2 is a block diagram showing the configuration of a program generation device 10 according to an embodiment. The program generation device 10 is, for example, a personal computer in which CAM application software is installed. The program generation device 10 generates, based on information designated by a user, a machining program for controlling electrical discharge machining performed by a wire electrical discharge machine 20. The information designated by the user includes information about a machining start position S, information about a machining path R indicating a machining shape, and information about a plurality of designated points P.

The machining program generated by the program generation device 10 is transferred to a controller 30 of the wire electrical discharge machine 20. The controller 30 controls the wire electrical discharge machine 20 by executing a machining program. The wire electrical discharge machine 20 performs electrical discharge machining on a workpiece W under the control of the controller 30.

An input device 40 and a display device 42 are connected to the program generation device 10. The user inputs information to the program generation device 10 via the input device 40. The input device 40 is, for example, a keyboard, a mouse, a stylus pen, a touch panel, or the like. The display device 42 displays the machining path R and an approach path A. The display device 42 is, for example, a liquid crystal display, an organic EL display, or the like.

The program generation device 10 includes a processing circuit 50 and a storage device 52. The processing circuit 50 includes a processor such as a CPU or a GPU. The storage device 52 includes a volatile memory such as a RAM, and a nonvolatile memory such as a ROM or a flash memory. The volatile memory is used as a working memory of the processor. The nonvolatile memory stores programs executed by the processor, and other necessary data. The storage device 52 also stores an execution file of the CAM and the generated machining program.

The processing circuit 50 includes an acquisition unit 70, a determination unit 72, an approach path generation unit 74, and a machining program generation unit 76. The acquisition unit 70, the determination unit 72, the approach path generation unit 74, and the machining program generation unit 76 are realized by the processing circuit 50 executing a program stored in the storage device 52. At least part of the acquisition unit 70, the determination unit 72, the approach path generation unit 74, and the machining program generation unit 76 may be realized by an integrated circuit such as an ASIC or an FPGA, or an electronic circuit including a discrete device.

The acquisition unit 70 acquires the machining start position S and the machining path R that are designated by the user. The information about the machining path R acquired by the acquisition unit 70 includes information about the machining shape and information about the position through which the machining path R passes. The acquisition unit 70 also acquires a plurality of designated points P sequentially designated by the user.

For example, the user draws the machining start position S and the machining path R on the screen of the display device 42 using the input device 40, whereby the acquisition unit 70 acquires the machining start position S and the machining path **R.** Thereafter, the user sequentially designates the plurality of designated points P on the screen of the display device 42 using the input device 40, whereby the acquisition unit 70 acquires the plurality of designated points P.

Based on the designated points P sequentially acquired by the acquisition unit 70, the determination unit 72 determines at least one or more via-points through which the approach path A passes. Based on the designated points P acquired by the acquisition unit 70, the determination unit 72 determines a connection element Ec from among elements included in the machining path R. Specifically, in the case where a certain designated point P is on an element included in the machining path R, the determination unit 72 determines this element as the connection element Ec.

The approach path generation unit 74 generates an approach path A extending from the machining start position S to the connection element Ec via the via-point. Every time a via-point is determined by the determination unit 72, the approach path A to the via-point is generated. In this case, when the connection element Ec is finally determined, the generation of the approach path A is completed.

It should be noted that the connection element Ec may be determined first, and the approach path A may be generated from the connection element Ec toward the machining start position S every time a via-point is determined. Further, the approach path A may be generated after all the via-points and the connection element Ec are determined by the determination unit 72.

The machining program generation unit 76 generates a machining program based on the shape in which the generated approach path A is added to the connection element Ec of the machining path R.

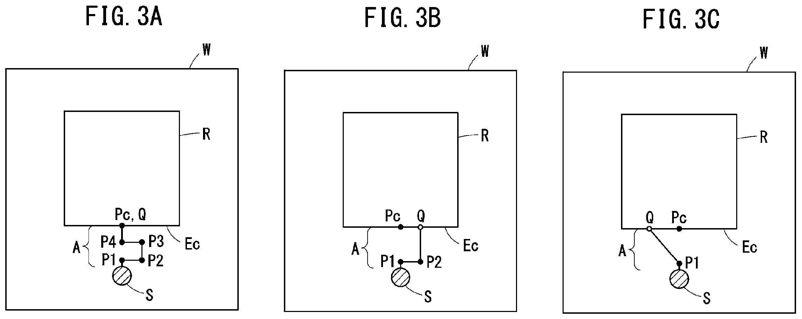

FIG. 3A is a diagram for explaining an example of the approach path A generated by the program generation device 10 according to the present embodiment. The user draws the machining start position S and the machining path R on the screen of the display device 42. Thus, the acquisition unit 70 acquires the machining start position S and the machining path R. Thereafter, the user designates five designated points P1, P2, P3, P4, and Pc in this order. Thus, the acquisition unit 70 acquires the designated points P1, P2, P3, P4, and Pc in this order. The acquisition unit 70 may acquire the machining start position S and the machining path R by reading them from a storage medium.

In the example shown in FIG. 3A, the designated points P1, P2, P3, and P4 are not on the machining path R, and therefore, the determination unit 72 determines all of the designated points P1, P2, P3, and P4 as the via-points. Since the designated point Pc is on the machining path R, the determination unit 72 determines the element including the designated point Pc as the connection element Ec. The connection element Ec is an element of the machining path R to which the approach path A is connected.

The approach path A is connected to the connection element Ec at a connection position Q. The connection position Q may be determined by a known determination process. For example, the connection position Q is a position on the connection element Ec and is closest to the last via-point on the approach path A created by sequentially connecting all the via-points from the machining start position S. That is, the position at which the distance from the last via-point to the connection element Ec is the shortest may be determined as the connection position Q. In the example shown in FIG. 3A, the connection position Q is a position on the connection element Ec and is closest to the designated point P4, which is the last via-point on the approach path A.

Incidentally, in the example shown in FIG. 3A, the connection position Q at which the approach path A is connected to the connection element Ec coincides with the designated point Pc on the connection element Ec. The designated point Pc designated by the user may be determined as the connection position Q. The connection position Q may be different from the designated point Pc on the connection element Ec.

According to the approach path A shown in FIG. 3A, unlike the example shown in FIG. 1, a part of the approach path A is not on the straight line connecting the machining start position S and the connection position Q. Specifically, the section from the designated point P1 to the designated point P4 is not on the straight line connecting the machining start position S and the connection position Q.

After the start of electrical discharge machining at the machining start position S, the wire electrode moves along the approach path A relatively with respect to the workpiece W. For convenience, the relative movement of the wire electrode with respect to the workpiece W may be simply referred to as movement of the wire electrode. In the example shown in FIG. 3A, the direction of the approach path A extending from the machining start position S changes to the right by 90 degrees at the designated point P1. Therefore, the moving direction of the wire electrode changes to the right by 90 degrees at the designated point P1.

In the example shown in FIG. 1, the machined section from an arbitrary machining position on the approach path A to the machining start position S has a linear shape. The working fluid injected at the arbitrary machining position on the approach path A flows to the large through hole at the machining start position S via the machined path section. Therefore, the pressure of the working fluid injected at the machining position decreases.

On the other hand, in the example shown in FIG. 3A, the machined path section from an arbitrary machining position located in a section after the designated point P1 to the machining start position S changes its direction at least at the designated point P1. Therefore, for example, the working fluid injected at the machining position within the section from the designated point P1 to the designated point P2 is received at the nearest designated point P1 via the machined path section. Therefore, the pressure of the working fluid injected at the machining position can be prevented from decreasing.

The same applies to a case where the machining position is located in a section after the designated point P2. The direction of the approach path A extending from the machining start position S changes to the left by 90 degrees at the designated point P2, changes to the left by 90 degrees at the designated point P3, and changes to the right by 90 degrees at the designated point P4. The working fluid injected at the machining position is received at the nearest designated point P2, P3, or P4. Therefore, the pressure of the working fluid injected at the machining position can be prevented from decreasing. In the section of the approach path A after the designated point P1, the working fluid injected during electrical discharge machining can be maintained at a high pressure.

FIG. 3B is a diagram for explaining another example of the approach path A to be generated. The user designates three designated points P1, P2, and Pc in this order. Thus, the acquisition unit 70 acquires the designated points P1, P2, and Pc in this order. In the example shown in FIG. 3B, the designated points P1 and P2 are not on the machining path R, and therefore, the determination unit 72 determines both of the designated points P1 and P2 as the via-points. Since the designated point Pc is on the machining path R, the determination unit 72 determines the element including the designated point Pc as the connection element Ec.

The approach path A is connected to the connection element Ec at a connection position Q. In the example shown in FIG. 3B, the connection position Q is a position on the connection element Ec and is closest to the designated point P2, which is the last via-point on the approach path A. In this example, the connection position Q at which the approach path A is connected to the connection element Ec is different from the designated point Pc on the connection element Ec.

According to the approach path A shown in FIG. 3B, the entire approach path A is not on the straight line connecting the machining start position S and the connection position Q. In the example shown in FIG. 3B, the direction of the approach path A extending from the machining start position S changes to the right by 90 degrees at the designated point P1. Therefore, the moving direction of the wire electrode changes to the right by 90 degrees at the designated point P1.

In the example shown in FIG. 3B, the machined path section from an arbitrary machining position located in a section after the designated point P1 to the machining start position S changes its direction at least at the designated point P1. For example, the working fluid injected at the machining position within the section from the designated point P1 to the designated point P2 is received at the nearest designated point P1 via the machined path section. Therefore, the pressure of the working fluid injected at the machining position can be prevented from decreasing.

The same applies to a case where the machining position is located in a section from the designated point P2 to the connection position Q. The direction of the approach path A extending from the machining start position S changes to the left by 90 degrees at the designated point P2. The working fluid injected at the machining position is received at the nearest designated point P2. In the section of the approach path A after the designated point P1, the working fluid injected during electrical discharge machining can be maintained at a high pressure.

FIG. 3C is a diagram for explaining still another example of the approach path A to be generated. The user designates two designated points P1 and Pc in this order. Thus, the acquisition unit 70 acquires the designated points P1 and Pc in this order. In the example shown in FIG. 3C, the designated point P1 is not on the machining path R, and therefore, the determination unit 72 determines the designated point P1 as the via-point. Since the designated point Pc is on the machining path R, the determination unit 72 determines the element including the designated point Pc as the connection element Ec.

As shown in FIG. 3C, the approach path generation unit 74 generates the approach path A such that the direction of the approach path A changes at the designated point P1, which is the via-point. The approach path A is connected to the connection element Ec at a connection position Q. In this example, the connection position Q at which the approach path A is connected to the connection element Ec is different from the designated point Pc on the connection element Ec.

According to the approach path A shown in FIG. 3C, the entire approach path A is not on the straight line connecting the machining start position S and the connection position Q. In the example shown in FIG. 3C, the direction of the approach path A extending from the machining start position S changes to the upper left at the designated point P1. Therefore, the moving direction of the wire electrode changes to the upper left at the designated point P1.

In the example shown in FIG. 3C, the machined path section from an arbitrary machining position, which is located in a section from the designated point P1 to the connection position Q, to the machining start position S changes its direction at the designated point P1. The working fluid injected at the machining position within the section from the designated point P1 to the connection position Q is received at the nearest designated point P1 via the machined path section. Therefore, the pressure of the working fluid injected at the machining position can be prevented from decreasing. In the section of the approach path A after the designated point P1, the working fluid injected during electrical discharge machining can be maintained at a high pressure.

The approach path A generated by the approach path generation unit 74 is not limited to the examples shown in FIG. 3A, FIG. 3B, and FIG. 3C. In the case where at least a part of the approach path A is not on the straight line connecting the machining start position S and the connection position Q, the working fluid injected during electrical discharge machining can be maintained at a high pressure.

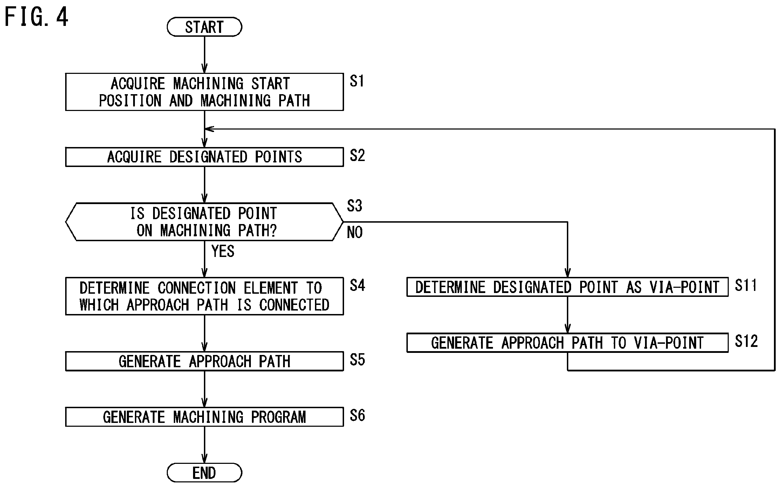

FIG. 4 is a flowchart showing an example of a processing procedure related to machining program generation performed by the program generation device 10 according to the present embodiment. This processing procedure is performed by, for example, the processing circuit 50 included in the program generation device 10. When the processing procedure is started, the user draws the machining start position S and the machining path R on the screen of the display device 42 using the input device 40. In step S1, the acquisition unit 70 acquires the machining start position S and the machining path R that are designated by the user.

The user sequentially designates a plurality of designated points P (for example, the plurality of designated points P1, P2, P3, P4, and Pc shown in FIG. 3A) on the screen of the display device 42 using the input device 40. In step S2, the acquisition unit 70 sequentially acquires the plurality of designated points P. In step S3, the determination unit 72 determines whether or not the designated point P acquired in step S3 is on the machining path R. In the case where the determination result in step S3 is YES, the processing procedure proceeds to step S4. In the case where the determination result in step S3 is NO, the processing procedure proceeds to step S11.

In step S4, based on the designated point P determined in step S3, the determination unit 72 determines a connection element Ec to which the approach path A is connected, from among the elements included in the machining path R. An element including the designated point P is determined as the connection element Ec. When step S4 is ended, the processing procedure proceeds to step S5.

In step S11, the determination unit 72 determines, as a via-point, the designated point P determined in step S3. In step S12, the approach path generation unit 74 generates the approach path A from the machining start position S to the via-point determined in step S11. The approach path generation unit 74 may display, on the display device 42, the incomplete approach path A that has been generated. When step S12 is ended, the processing procedure returns to step S2. In step S2 again, the next designated point P is acquired.

As described above, in step S4 and step S11, the determination unit 72 determines the connection element Ec and the via-point. Accordingly, the approach path A can be appropriately generated.

In step S5, the approach path generation unit 74 generates the approach path A extending from the machining start position S to the connection element Ec via all the via-points. As illustrated in FIG. 3A, FIG. 3B, and FIG. 3C, the approach path A is generated such that the direction of the approach path A changes at the via-point. It is preferable that the section from the machining start position S to the designated point P1, which is the first via-point, is short. In this step S5, the generation of the approach path A is completed. The approach path generation unit 74 may display the completed approach path A on the display device 42.

In step S6, the machining program generation unit 76 generates a machining program based on the approach path A generated in step S5 and the machining path R acquired in step S1. When the process of step S6 is completed, this processing procedure is ended.

According to the present embodiment, the direction of the approach path A changes at the first via-point located next to the machining start position S. Therefore, in the electrical discharge machining in the approach path A, the possibility of breakage of the wire electrode is reduced, and the machining speed is maintained.

The above-described embodiment may be modified in the following manner. In the following modification, description overlapping with that of the embodiment will be omitted.

### (Modification)

The plurality of designated points P may not be designated by the user. In the present modification, the acquisition unit 70 shown in FIG. 2 acquires the machining start position S and the machining path R that are designated by the user. However, the acquisition unit 70 does not acquire the plurality of designated points P, unlike the above-described embodiment.

The determination unit 72 shown in FIG. 2 determines the connection element Ec based on the machining start position S and the machining path R acquired by the acquisition unit 70. For example, among the elements included in the machining path R, an element closest to the machining start position S is determined as the connection element Ec. Further, the determination unit 72 determines at least one or more via-points. The via-points are determined so that at least a part of the approach path A is not on a straight line connecting the machining start position S and a position on the connection element Ec to which the approach path A is connected.

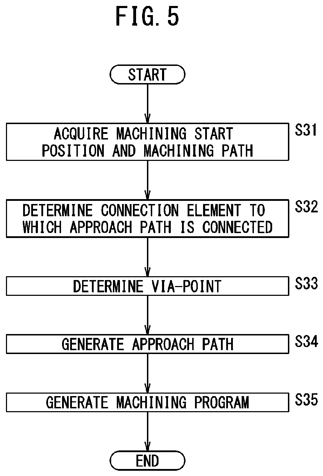

FIG. 5 is a flowchart showing an example of a processing procedure related to machining program generation performed by the program generation device 10 of the present modification. This processing procedure is performed by, for example, the processing circuit 50 included in the program generation device 10. When the processing procedure is started, the user draws the machining start position S and the machining path R on the screen of the display device 42 using the input device 40. In step S31, the acquisition unit 70 acquires the machining start position S and the machining path R that are designated by the user.

In step S32, the determination unit 72 determines the connection element Ec to which the approach path A is connected, from among the elements included in the machining path R. The connection element Ec is determined based on the machining start position S and the machining path R acquired in step S31.

In step S33, the determination unit 72 determines a via-point based on the machining start position S acquired in step S31 and the connection element Ec determined in step S32.

In step S34, the approach path generation unit 74 generates the approach path A extending from the machining start position S to the connection element Ec via the via-point. The approach path generation unit 74 may display the generated approach path A on the display device 42. The approach path A is generated such that the direction of the approach path A changes at the via-point. It is preferable that the section from the machining start position S to the first via-point is short.

In step S35, the machining program generation unit 76 generates a machining program based on the approach path A generated in step S34 and the machining path R acquired in step S31. When the process of step S35 is completed, this processing procedure is ended.

According to the present modification, unlike the embodiment described above, the user does not need to designate a plurality of designated points P. Therefore, in the electrical discharge machining in the approach path A, the possibility of breakage of the wire electrode is reduced and the machining speed is maintained by a simple operation.

In the embodiment and the modification described above, the approach path generation unit 74 generates the approach path A such that the direction of the approach path A changes at at least one or more via-points. Therefore, in the electrical discharge machining in the approach path A, the possibility of breakage of the wire electrode is reduced, and the machining speed is maintained.

The following supplementary notes are further disclosed in relation to the above-described embodiment and modification.

### (Supplementary Note 1)

The present disclosure is the program generation device (10) that generates the machining program for controlling the wire electrical discharge machine (20), the program generation device including: the acquisition unit (70) configured to acquire the machining start position (S) and the machining path (R) indicating the machining shape, the machining start position and the machining path being designated by the user; the determination unit (72) configured to determine the connection element (Ec) which is an element of the machining path to which the approach path (A) extending from the machining start position is connected, and at least one or more via-points through which the approach path passes; the approach path generation unit (74) configured to generate the approach path extending from the machining start position to the connection element via the at least one or more via-points; and the machining program generation unit (76) configured to generate the machining program based on a shape in which the generated approach path is added to the connection element of the machining path, wherein the approach path generation unit generates the approach path in a manner so that the direction of the approach path changes at the at least one or more via-points.

### (Supplementary Note 2)

In the program generation device according to Supplementary Note 1, the acquisition unit may acquire the designated points (P) sequentially designated by the user, and the determination unit may determine whether or not each of the designated points is on the machining path, wherein, in a case of determining that the designated point is not on the machining path, the determination unit may determine the designated point as one of the at least one or more via-points, and in a case of determining that the designated point is on the machining path, the determination unit may determine the element including the designated point as the connection element.

### (Supplementary Note 3)

In the program generation device according to Supplementary Note 1 or 2, the determination unit may determine the at least one or more via-points in a manner so that at least a part of the approach path is not on the straight line connecting the machining start position and the connection position (Q) at which the approach path is connected to the connection element.

### (Supplementary Note 4)

The present disclosure is a program generation method for generating the machining program for controlling the wire electrical discharge machine (20), the program generation method including: the acquisition step of acquiring the machining start position (S) and the machining path (R) that are designated by the user; the determination step of determining the connection element (Ec) which is an element of the machining path to which the approach path (A) extending from the machining start position is connected, and at least one or more via-points through which the approach path passes; the approach path generation step of generating the approach path extending from the machining start position to the connection element via the at least one or more via-points; and the machining program generation step of generating the machining program based on a shape in which the generated approach path is added to the connection element of the machining path, wherein, in the approach path generation step, the approach path is generated in a manner so that the direction of the approach path changes at the at least one or more via-points.

### (Supplementary Note 5)

In the program generation method according to Supplementary Note 4, in the acquisition step, the designated points (P) sequentially designated by the user may be acquired, and in the determination step, whether or not each of the designated points is on the machining path may be determined, wherein in a case where it is determined that the designated point is not on the machining path, the designated point may be determined as one of the at least one or more via-points, and in a case where it is determined that the designated point is on the machining path, the element including the designated point may be determined as the connection element.

### (Supplementary Note 6)

In the program generation method according to Supplementary Note 4 or 5, in the determination step, the at least one or more via-points may be determined in a manner so that at least a part of the approach path is not on the straight line connecting the machining start position and the connection position (Q) at which the approach path is connected to the connection element.

Although the present disclosure has been described in detail, the present disclosure is not limited to the above-described individual embodiments. Various additions, replacements, modifications, partial deletions, and the like can be made to these embodiments without departing from the gist of the present disclosure or without departing from the essence of the present disclosure derived from the claims and equivalents thereof. Further, these embodiments can also be implemented in combination. For example, in the above-described embodiments, the order of operations and the order of processes are shown as examples, and are not limited to these. Furthermore, the same applies to a case where numerical values or mathematical expressions are used in the description of the above-described embodiments.

### REFERENCE SIGNS LIST

- 10:: program generation device
- 20:: wire electrical discharge machine
- 30:: controller
- 40:: input device
- 42:: display device
- 50:: processing circuit
- 52:: storage device
- 70:: acquisition unit
- 72:: determination unit
- 74:: approach path generation unit
- 76:: machining program generation unit

## Claims

1. A program generation device that generates a machining program for controlling a wire electrical discharge machine, the program generation device comprising:
an acquisition unit configured to acquire a machining start position, and a machining path indicating a machining shape, the machining start position and the machining path being designated by a user;
a determination unit configured to determine a connection element that is an element of the machining path to which an approach path extending from the machining start position is connected, and at least one or more via-points through which the approach path passes;
an approach path generation unit configured to generate the approach path extending from the machining start position to the connection element via the at least one or more via-points; and
a machining program generation unit configured to generate the machining program based on a shape in which the approach path that has been generated is added to the connection element of the machining path,
wherein the approach path generation unit generates the approach path in a manner so that a direction of the approach path changes at the at least one or more via-points.

2. The program generation device according to claim 1, wherein
the acquisition unit acquires designated points sequentially designated by the user, and
the determination unit determines whether or not each of the designated points is on the machining path, wherein in a case of determining that the designated point is not on the machining path, the determination unit determines the designated point as one of the at least one or more via-points, and in a case of determining that the designated point is on the machining path, the determination unit determines the element including the designated point as the connection element.

3. The program generation device according to claim 1 or 2, wherein
the determination unit determines the at least one or more via-points in a manner so that at least a part of the approach path is not on a straight line connecting the machining start position and a connection position at which the approach path is connected to the connection element.

4. A program generation method for generating a machining program for controlling a wire electrical discharge machine, the program generation method comprising:
an acquisition step of acquiring a machining start position and a machining path that are designated by a user;
a determination step of determining a connection element that is an element of the machining path to which an approach path extending from the machining start position is connected, and at least one or more via-points through which the approach path passes;
an approach path generation step of generating the approach path extending from the machining start position to the connection element via the at least one or more via-points; and
a machining program generation step of generating the machining program based on a shape in which the approach path that has been generated is added to the connection element of the machining path,
wherein, in the approach path generation step, the approach path is generated in a manner so that a direction of the approach path changes at the at least one or more via-points.

5. The program generation method according to claim 4, wherein
in the acquisition step, designated points sequentially designated by the user are acquired, and
in the determination step, whether or not each of the designated points is on the machining path is determined, wherein in a case where it is determined that the designated point is not on the machining path, the designated point is determined as one of the at least one or more via-points, and in a case where it is determined that the designated point is on the machining path, the element including the designated point is determined as the connection element.

6. The program generation method according to claim 4 or 5, wherein
in the determination step, the at least one or more via-points are determined in a manner so that at least a part of the approach path is not on a straight line connecting the machining start position and a connection position at which the approach path is connected to the connection element.
